# EUROPÄISCHE PATENTSCHRIFT

(11) **EP 0 958 019 B1**
(45) Veröffentlichungstag und Bekanntmachung des Hinweises auf die Patenterteilung: **22.08.2001**
(21) Anmeldenummer: 98907989.2
(22) Anmeldetag: 24.01.1998
(51) Int. Cl.: B01D 3/00

(54) **DISPERSIONSEINRICHTUNG FÜR EINEN FLÜSSIGKEITSVERTEILER ZUR BERIESELUNG VON STOFF- UND/ODER WÄRMEAUSTAUSCHSYSTEMEN**
DISPERSION DEVICE FOR A DISPENSER FOR SPRINKLING LIQUID ONTO SUBSTANCE AND/OR HEAT EXCHANGE SYSTEMS
DISPOSITIF DE DISPERSION POUR DISTRIBUTEUR DE LIQUIDE UTILISE POUR ARROSER DES SYSTEMES D'ECHANGES DE SUBSTANCES ET/OU DE CHALEUR

(30) Priorität: 03.02.1997 DE 29701830 U
(43) Veröffentlichungstag der Anmeldung: 24.11.1999
(73) Patentinhaber: Raschig GmbH, 67061 Ludwigshafen (DE)
(72) Erfinder: SCHULTES, Michael, D-67061 Ludwigshafen (DE)
(74) Vertreter: Leitner, Waldemar, Dr. techn.
(86) Internationale Anmeldenummer: EP9800400
(87) Internationale Veröffentlichungsnummer: WO9833570

(56) Entgegenhaltungen:
- EP-A- 0 512 277
- WO-A-90/14879
- DE-U- 1 908 624
- PATENT ABSTRACTS OF JAPAN vol. 012, no. 181 (C-499), 27.Mai 1988 & JP 62 286531 A (TERUMO CORP), 12.Dezember 1987,

## Beschreibung

Die Erfindung betrifft eine Dispersionseinrichtung für einen Flüssigkeitsverteiler zur Berieselung von Stoff- und/oder Wärmeaustauschsystemen, insbesondere von in Kolonnen oder Türmen angeordneten Packungen oder Einbauelementen, die ein hülsenförmiges Zentralelement aufweist, das in eine Auslaßöffnung eines Flüssigkeitsverteilers einsetzbar ist und im oberen Bereich seiner Wand mehrere Einlaßöffnungen aufweist, durch die im Flüssigkeitsverteiler befindliche Flüssigkeit ohne Druckbeaufschlagung in den Innenraum des Zentralelements eintretbar ist.

Eine derartige Dispersionseinrichtung für einen Flüssigkeitsverteiler ist aus der EP-A-0 512 277 bekannt. Hierbei ist vorgesehen, daß das Zentralelement der Dispersionseinrichtung als Abflußröhrchen ausgebildet ist, das in die zugehörige Auslaßöffnung des Flüssigkeitsverteilers eingeschweißt ist. Jedes Abflußröhrchen hat einige Zentimeter oberhalb des Bodens des Rinnenverteilers Bohrungen, durch welche die Flüssigkeit aus dem Inneren des Flüssigkeitsverteilers durch die Wirkung der Gravitation in das Abflußröhrchen abfließen kann. Jedes Abflußröhrchen des Flüssigkeitverteilers mündet in einem außerhalb des Flüssigkeitsverteilers angeordneten Topf. An dem unteren Rand der Topfwand sind Finger befestigt oder angeformt, die nach außen gebogen sind. Oberhalb der Finger sind an der Topfwand Öffnungen vorgesehen, durch die die aus dem Flüssigkeitsverteiler fließende und im Topf aufgenommene Flüssigkeit austreten und zu den Fingern fließen kann, um den in der Stoff- und/oder Wärmeaustauschkolonne befindlichen Füllkörpern oder Packungen die zu fraktionierende Flüssigkeit zuzuführen.

Die bekannte Dispersionseinrichtung für einen Flüssigkeitsverteiler sowie ein diese Dispersionseinrichtung verwendender Flüssigkeitsverteiler besitzen den Nachteil, daß die vorstehend beschriebene Bauweise der Dispersionseinrichtung und somit des Flüssigkeitsverteilers äußerst kostenaufwendig und daher unwirtschaftlich ist.

Es ist daher Aufgabe der Erfindung, eine Dispersionseinrichtung der eingangs genannten Art weiterzubilden, daß eine einfache und kostengünstige Bauweise gegeben ist.

Diese Aufgabe wird erfindungsgemäß dadurch gelöst, daß im Innenraum des Zentralelements ein oder mehrere Ablaufelemente angeordnet sind, die jeweils einen oberen Kanalbereich und einen unteren Abtropfbereich aufweisen, wobei der oder die oberen Kanalbereiche des oder der Ablaufelemente vom Innenraum des Zentralelements eine entsprechende Anzahl von Ablaufkanälen abgrenzen, in welche die Flüssigkeit durch die in der Wand des Zentralelements angeordneten Einlaßöffnungen eintretbar ist, und wobei der oder die aus dem Zentralelement hervortretenden unteren Abtropfbereiche der Ablaufelemente von der Längsachse des Zentralelements weg weisende fingerförmige Elemente ausbilden, von dem oder denen die durch die Eintrittsöffnungen des Zentralelements in den oder die Ablaufkanäle eintretende Flüssigkeit des Flüssigkeitsverteilers auf das Stoff- und/oder Wärmeaustauschsystem abtropfbar ist.

Durch die erfindungsgemäßen Maßnahmen wird in vorteilhafter Art und Weise eine insbesondere für einen Kastenrinnenverteiler geeignete Dispersionseinrichtung zur Berieselung von Stoff- und/oder Wärmeaustauschsystemen, insbesondere von derartigen Kolonnen oder Türmen, geschaffen, die sich durch ihren einfachen und daher kostengünstigen Aufbau auszeichnet Zur Ableitung der Flüssigkeit aus dem Flüssigkeitsverteiler sowie zur Verteilung der Flüssigkeit auf die unter dem Flüssigkeitsverteiler angeordneten Packungen oder Füllkörper der Stoff- und/oder Wärmeaustauschkolonnen ist nun nicht mehr - wie bei den bekannten Dispersionseinrichtungen verwendenden Flüssigkeitsverteilem - eine aus zwei getrennten Bestandteilen - nämlich aus einem Ablaufröhrchen sowie einem davon räumlich separierten, außerhalb des Flüssigkeitsverteilers angeordneten Topf bestehende Dispersionseinrichtung erforderlich, zu deren Montage im Flüssigkeitsverteiler zuerst das Ablaufröhrchen dichtend in die Auslaßöffnung des Flüssigkeitsverteilers eingesetzt, dann den Topf mit den daran angeformten Ablauffingern über den unteren, aus dem Flüssigkeitsverteiler hervortretenden Teil des Röhrchens geschoben und danach der Topf am Boden des Flüssigkeitsverteilers verschweißt werden muß.

Vielmehr ist die erfindungsgemäß ausgebildete Dispersionseinrichtung dagegen in vorteilhafter Art und Weise aufgrund ihres relativ einfachen Aufbaus kostengünstig herzustellen und desweiteren in einem einzigen Arbeitsgang im Flüssigkeitsverteiler zu montieren. Die im Inneren des hülsenförmigen Zentralelements angeordneten, die Ablaufkanäle und zugleich die Ablauffinger ausbildenden Ablaufelemente stellen relativ einfache und daher kostengünstig herzustellende Bauelemente dar, die zu einer Ablaufelemente-Einheit vormontierbar sind und daher einfach in das hülsenförmige Zentralelement der Dispersionseinrichtung für einen Flüssigkeitsverteiler eingebracht und darin montiert werden können. Die derart ausgebildete erfindungsgemäße Dispersionseinrichtung kann daher besonders einfach in die Auslaßöffnung des Flüssigkeitsverteilers eingesetzt werden.

Eine vorteilhafte Weiterbildung der Erfindung sieht vor, daß das Zentralelement ein nach außen vorspringendes Anschlagelement aufweist, das beim Einsetzen der Dispersionseinrichtung in den Flüssigkeitsverteiler eine Anschlagfläche ausbildet. Die erfindungsgemäße Maßnahme bewirkt, daß ein einfaches Abdichten der die erfindungsgemäße Dispersionseinrichtung aufnehmenden Auslaßöffnung gewährleistet ist, da das Anschlagelement, vorzugsweise ein Flansch, aufgrund seines gegenüber dem Zentralelement größeren Durchmessers leicht maschinell mit dem Flüssigkeitsverteiler verbunden werden kann. Desweiteren bringt das erfingungsgemäß vorgesehene Anschlagelement des Zentralelements in vorteilhafter Art und Weise mit sich, daß eine exakte Festlegung der Position der Einlaßöffnungen des Zentralelements im Flüssigkeitsverteiler erreicht wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird.
Es zeigen:
- Figur 1: ein Ausführungsbeispiel einer Dispersionseinrichtung,
- Figur 2: einen Schnitt entlang der Linie II - II der Figur 1,
- Figur 3: eine schematische Darstellung eines bekannten Flüssigkeitsverteilers, und
- Figur 4: eine Ausführungsform eines Flüssigkeitsverteilers mit eingesetzter Dispersionseinrichtung

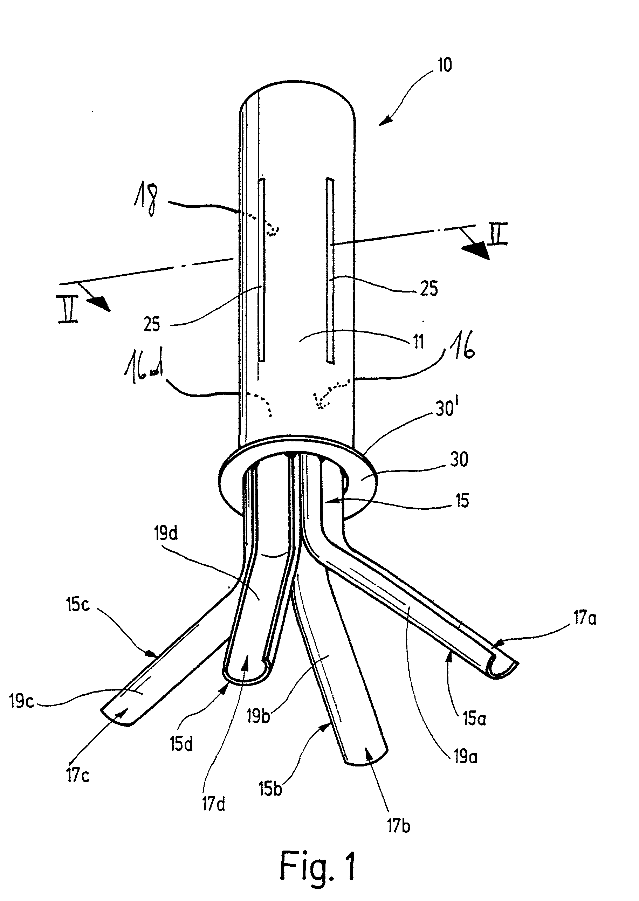

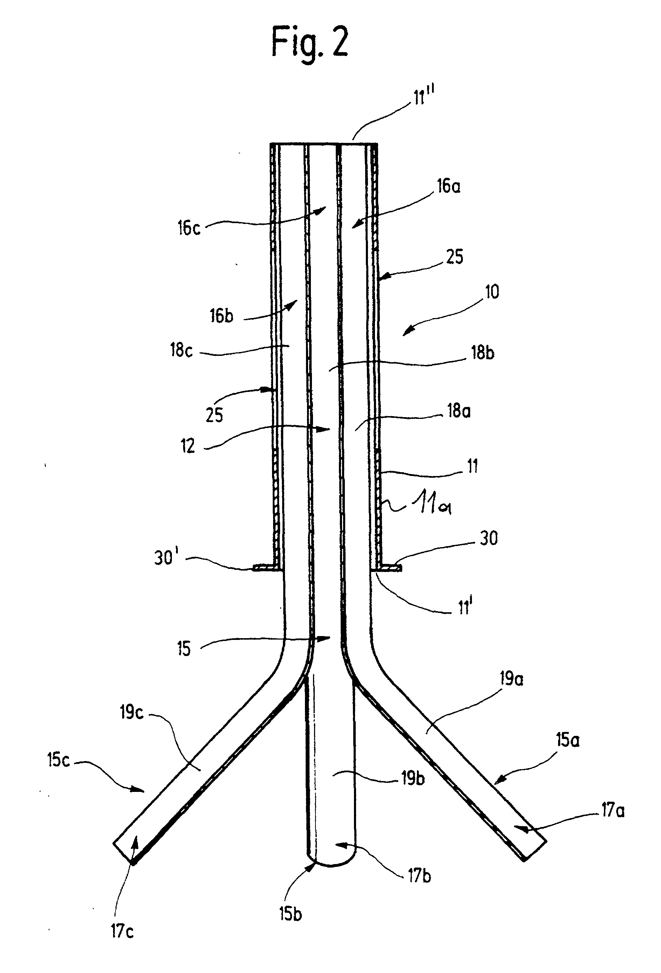

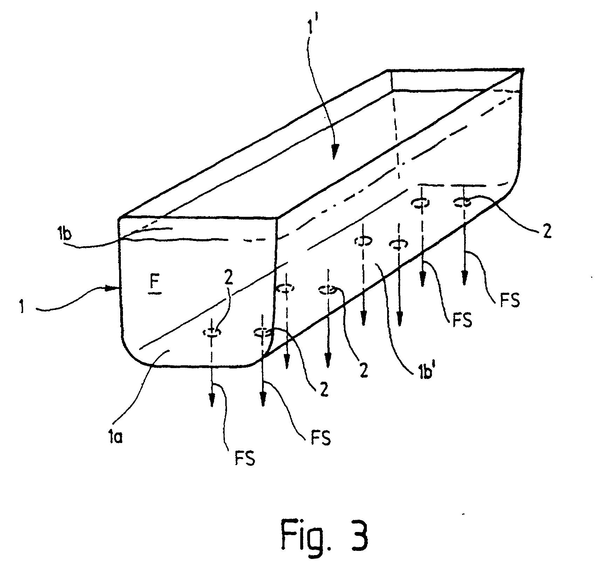

Bevor nun das in den Figuren 1 und 2 dargestellte, allgemein mit 10 bezeichnete Ausführungsbeispiel einer Dispersionseinrichtung für einen Flüssigkeitsverteiler 1 näher beschrieben wird, soll der Vollständigkeit halber zuerst der prinzipielle Aufbau und die Funktionsweise des in Figur 3 dargestellten Flüssigkeitsverteilers 1 kurz erläutert werden: Die gezeigte Ausführungsform eines Flüssigkeitsverteilers 1 zur Berieselung von Stoff- und/oder Wärmeaustauschsystemen, insbesondere von in Türmen oder Kolonnen angeordneten Einbauelementen oder Packungen, ist als ein nach oben offener Kastenrinnenverteiler ausgebildet, der einen Bodenbereich 1a und zwei Wandbereiche 1b, 1b' aufweist. Im Bodenbereich 1 sind Auslaßöffnungen 2 vorgesehen, durch den die dem Flüssigkeitsverteiler 1 zugeführte und in seinem Innenraum 1' befindliche Flüssigkeit F durch die Wirkung der Gravitation, also ohne Druckbeaufschlagung, über die in die Auslaßöffnungen 2 einsetzbaren Dispersionseinrichtungen 10 in Flüssigkeitsströmen FS austreten kann, um auf unter dem Flüssigkeitsverteiler 1 befindliche Füllkörper oder Packungen (nicht gezeigt) einer Stoff und/oder Wärmeaustauschkolonne - oder eines derartigen Turmes - zu tropfen. Dem Fachmann ist der Aufbau eines derartigen Flüssigkeitsverteilers 1 - unter anderem auch aus der Infomationsbroschüre "Internals For Packed Columns" der Anmelderin - bekannt, sodaß ihm auch bewußt ist, daß die in Figur 3 dargestellte Anordnungen und Ausbildungen des Flüssigkeitsverteilers 1 und insbesondere seiner Auslaßöffnungen 2 nur exemplarischen Charakter besitzt und in keinem Fall als zwingend aufzufassen ist. Insbesondere ist ihm bewußt, daß bei einem realen Flüssigkeitsverteiler 1 die Anzahl der Auslaßöffnungen 2 bei weitem größer als die in Figur 3 gezeigte ist, da aus Gründen der Übersichtlichkeit in dieser Figur nur einige wenige Auslaßöffnungen 2 dargestellt wurden. Dies schränkt jedoch die Allgemeinheit der folgenden Überlegungen nicht ein.

Wie nun aus den Figuren 1 und 2 ersichtlich ist, gliedert sich die beschriebene Dispersionseinrichtung 10 für den Flüssigkeitsverteiler 1 im wesentlichen in ein Zentralelement 11 und in vier Ablaufelemente 15a-15d sowie in ein vom Zentralelement 11 radial nach außen vorspringendes Anschlagelement, insbesondere einen Flansch. Das Zentralelement 11 ist hülsenförmig ausgebildet und vorzugsweise aus Metall, zum Beispiel aus Edelstahl oder aus Aluminium, oder aus einem Kunststoffmaterial gefertigt. Im durch eine Wand 11a begrenzten Innenraum 12 des hülsenförmigen Zentralelements 11 sind die vier Ablaufelemente 15a-15d angeordnet, die sich in dem hier gezeigten Fall in etwa vom oberen Ende 11" des Zentralelements 11 ausgehend nach unten erstrecken, aus dem unteren Ende 11' des Zentralelements 11 hervortreten und dort einen vorzugsweise nach außen gekrümmten Verlauf aufweisen. Im Innenraum 12 des hülsenförmigen Zentralelements 11 bilden obere Kanalbereiche 18a-18d der Ablaufelemente 15a-15d Ablaufkanäle 16a-16d aus, die über eine entsprechende Anzahl von Einlaßöffnungen 25 des hülsenförmigen Zentralelements 11 mit dem Innenraum 1' des Flüssigkeitsverteilers 1 in Verbindung stehen. Hierdurch kann die im Inneren des Flüssigkeitsverteilers 1 befindliche Flüssigkeit F ohne Druckbeaufschlagung in Teilströmen FS in die durch die oberen Kanalbereiche 18a-18d der Ablaufelemente 15a-15d begrenzten Ablaufkanäle 16a-16d eintreten. Von dort aus gelangen sie zu den integral mit den Kanalbereichen 18a-18d der Ablaufelemente 15a-15d ausgebildeten Abtropfbereichen 19a-19d der Ablaufelemente 15a-15d. Diese bilden von der Längsachse des Zentralelements 11 weg weisende Fingelelemente 17a-17d aus, von denen die aus dem Innenraum 1' des Flüssigkeitsverteilers 1 durch die Eintrittsöffnung 25 in den Innenraum 12 des hülsenförmigen Zentralelements 11 - und somit in die in diesem angeordneten Ablaufkanäle 16a-16d - eintretende Flüssigkeit F auf die unter der Dispersionseinrichtung 10 des Flüssigkeitsverteilers 1 angeordneten Packungen und/oder Einbauelemente der Stoff- und/oder Wärmeaustauschsysteme abtropfen kann.

Die durch die beschriebenen Ablaufelemente 15-15d erreichte Einstückigkeit der die Ablaufkanäle 16a-16d begrenzenden Kanalbereiche 18a-18d mit den Fingerelemente 17a-17d ausbildenden Abtropfbereichen 19a-19d bewirkt in vorteilhafter Art und Weise nicht nur, daß die Herstellung der einzelnen Ablaufelemente 15a-15d besonders einfach und daher kostengünstig ist. Vielmehr ist auch die Montage der Ablaufelemente 15a-15d - welche vorzugsweise aus einfachen Halbröhren bestehen - im Zentralelement 11 besonders einfach durchführbar, da zur Ausbildung der beschriebenen Dispersionseinrichtung 10 zuerst die vier Ablaufelemente 15a-15d aneinander zu einer einzigen Einheit 15 befestigt werden können. Die derart vormontierten Ablaufelemente-Einheit 15 wird dann in den Innenraum 12 des Zentralelements 11 der Dispersionseinrichtung 10 eingebracht und mit diesem verbunden.

Abschließend zur Ausbildung des Zentralelements 11 der Dispersionseinrichtung 10 sowie der Ablaufelemente 15a-15d ist anzuführen, daß es keinesfalls erforderlich ist, daß das Zentralelement 11 die in den Figuren 1 und 2 dargestellte hohlzylindrische Ausbildung aufweist. Vielmehr ist es auch möglich, daß die Wand 11 a des hülsenförmigen Zentralelements 11 einen polygonalen oder ovalen Querschnitt ist aufweist.

In entsprechender Art und Weise ist es nicht erforderlich, daß die vorzugsweise rinnenförmig ausgebildeten Ablaufelemente 15a-15d den dargestellten halbkreisförmigen Querschnitt aufweisen. Dem Fachmann ist aus der obigen Beschreibung klar ersichtlich, daß er den Querschnitt der Ablaufelemente 15a-15d auch V- oder U-förmig wählen kann. Auch ist ein beliebiger polygonaler Querschnitt möglich.

Ebenso ist ihm ersichtlich, daß die gezeigte Anzahl von vier Ablaufelementen 15a-15d nur exemplarischen Charakter besitzt, da es genauso gut möglich ist, in den Innenraum 12 des Zentralelements 11 der Dispersionseinrichtung 10 mehr oder weniger Ablaufelemente 15a-15d einzusetzen.

Von Vorteil ist ebenfalls, daß das Zentralelement 11 - vorzugsweise an seinem unteren Ende 11' - ein Anschlagelement, hier den nach außen vorspringenden Flansch 30, aufweist. Auf diese Art und Weise ist es leicht möglich, im eingesetzten Zustand des Dispersionseinrichtung 10 die ihr zugeordnete Ablauföffnung 2 zu verschließen, indem der Umfangsrand 30' des Flansches 30 mit dem Boden 1a des Flüssigkeitsverteilers 1 verschweißt oder verklebt wird. Der gegenüber dem Durchmesser des Zentralelements 11 der Dispersionseinrichtung 10 größere Durchmesser des Flansches 30 bewirkt in vorteilhafter Art und Weise, daß der Verschweißvorgang leichter durchzuführen ist. Hierbei ist noch anzuführen, daß es für eine Vielzahl von Einsatzzwecken durchaus ausreichen sein kann, daß der Flansch 30 mit dem Boden 1a des Flüssigkeitsverteilers 1 nur punktverschweißt wird, und daß der übrige Umfangsbereich durch ein entsprechendes Abdichtmittel flüssigkeitsdicht verschlossen wird.

Ein weiterer Vorteil des integral mit Zentralelement 11 ausgeführten oder fest mit diesem verbundenen Flansches 30 besteht weiterhin darin, daß dadurch eine definierte Position der Eintrittsöffnungen 25 der Dispersionseinrichtung 10 im Flüssigkeitsverteiler 1 gegeben ist.

Abschließend ist festzustellen, daß die beschriebene Dispersionseinrichtung 10 sich nicht nur durch ihren einfachen Aufbau und ihre Montagefreundlichkeit auszeichnet. Vielmehr bestehen weitere Vorteile der beschriebenen Dispersionseinrichtung 10 darin, daß diese äußerst kompakt baut und leicht zu reinigen ist.

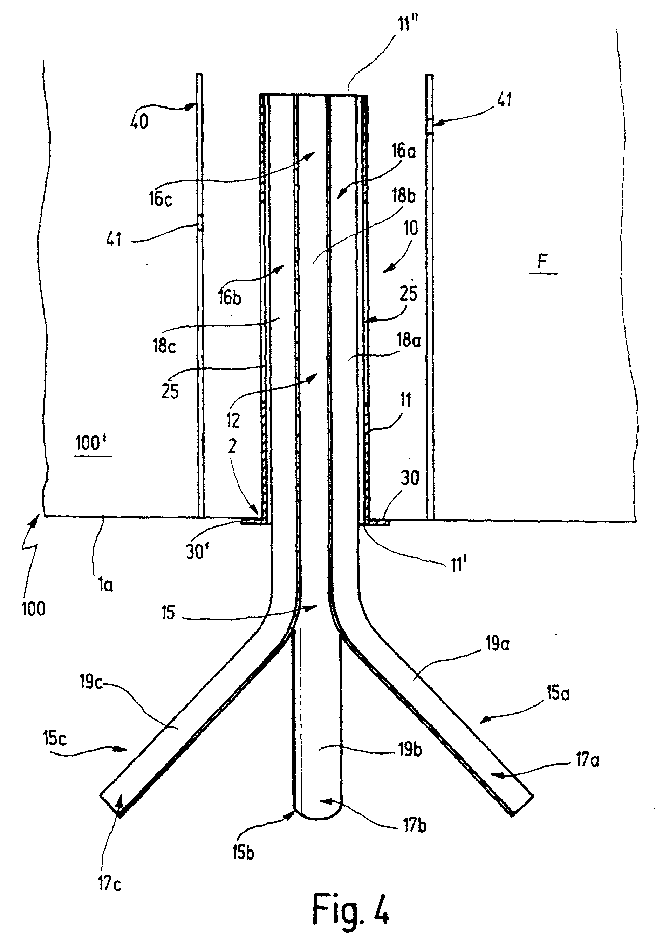

In Figur 4 ist nun ein teilweiser Längsschnitt durch einen Flüssigkeitsverteiler 100 mit einer eingesetzten Dispersionseinrichtung 10 gezeigt, wobei der Flüssigkeitsverteiler 100 seinem grundsätzlichem Aufbau nach mit dem Flüssigkeitsverteiler 1 der Figur 3 übereinstimmt. Der wesentliche Unterschied zwischen dem Flüssigkeitsverteiler 1 und dem Flüssigkeitsverteiler 100 wie in Figur 4 dargestellt besteht nun darin, daß der Flüssigkeitsverteiler 100 ein Hüllelement 40, vorzugsweise ein Hüllrohr, für das in seinen Innenbereich 100' ragenden Zentralelement 11 der Dispersionseinrichtung 10 aufweist. Dieses Hüllelement 40 ist mit mindestens einer Einlaßöffnung 41 ausgerüstet, so daß die im Innenraum 100' des Flüssigkeitsverteilers 100 befindliche Flüssigkeit F über die Einlaßöffnung 41 des Hüllelement 40 zu der in ihm aufgenommene Dispersionseinrichtung 10 gelangen kann.

Die Anordnung eines Hüllelement 40 um das Zentralelement 11 der Dispersionseinrichtung 10 besitzt den Vorteil, daß trotz relativ großer Eintrittsöffnungen 25 der Ablaufkanäle 16-16d der Dispersionseinrichtung 10 ein relativ geringer Flüssigkeitsdurchsatz für jeden der vier Ablaufkanäle 16-16d erzielbar ist, da der Zustrom der durch die Dispersionseinrichtung 10 zu verteilenden Flüssigkeit F durch die mindestens eine Einlaßöffnung 41 des Hüllelements 40 begrenzt wird. Im praktischen Einsatz ist es meistens nicht möglich, die Eintrittsöffnung 25 des Zentralelements 11 der Dispersionseinrichtung 10 mit einem Durchmesser von kleiner als 2mm auszubilden, da ansonsten die Gefahr besteht, daß die Eintrittsöffnungen 25 verstopfen, so daß durch die Minimalgröße der Eintrittsöffnungen 25 ein Minimalwert des zum Durchmesser der Eintrittsöffnung 25 proportionalen Volumenstroms erreicht wird.

Die Anordnung des Hüllelements 40 um das Zentralelement 11 der Dispersionseinrichtung 10 besitzt desweiteren den Vorteil, daß im Inneren des Hüllelements 40 kein Flüssigkeitsgradient auftritt, so daß in vorteilhafter Art und Weise einer Ungleichverteilung der durch die einzelnen Ablaufkanäle 16-16d austretenden Flüssigkeitsströme FS wirksam entgegengewirkt wird und niedrige Überstauhöhen zugelassen werden können.

## Patentansprüche

1. Dispersionseinrichtung für einen Flüssigkeitsverteiler zur Berieselung von Stoff- und/oder Wärmeaustauschsystemen, insbesondere von in Kolonnen oder Türmen angeordneten Packungen oder Einbauelementen, die ein hülsenförmiges Zentralelement (11) aufweist, das in eine Auslaßöffnung (2) eines Flüssigkeitsverteilers (1) einsetzbar ist und im oberen Bereich seiner Wand (11a) mehrere Einlaßöffnungen (25) aufweist, durch die im Flüssigkeitsverteiler (1;100) befindliche Flüssigkeit (F) ohne Druckbeaufschlagung in den Innenraum (12) des Zentralelements (11) eintretbar ist, dadurch gekennzeichnet, daß im Innenraum (12) des Zentralelements (11) ein oder mehrere Ablaufelemente (15a-15d) angeordnet sind, die jeweils einen oberen Kanalbereich (18a-18d) und einen unteren Abtropfbereich (19a-19d) aufweisen, wobei der oder die oberen Kanalbereiche (18a-18d) des oder der Ablaufelemente (15a-15d) vom Innenraum (12) des Zentralelements (11) eine entsprechende Anzahl von Ablaufkanälen (16a-16d) abgrenzen, in welche die Flüssigkeit (F) durch die in der Wand (11a) des Zentralelements (11) angeordneten Einlaßöffnungen (25) eintretbar ist, und wobei der oder die aus dem Zentralelement (11) hervortretenden unteren Abtropfbereiche (19a-19d) der Ablaufelemente (15a-15d) von der Längsachse des Zentralelements (11) weg weisende fingerförmige Elemente (17a-17d) ausbilden, von dem oder denen die durch die Eintrittsöffnungen (25) des Zentralelements (11) in den oder die Ablaufkanäle (16a-16d) eintretende Flüssigkeit (F) des Flüssigkeitsverteilers (1; 100) auf das Stoff- und/oder Wärmeaustauschsystem abtropfbar ist.

2. Dispersionseinrichtung nach Anspruch 1, dadurch gekennzeichnet, daß mindestens eines der Ablaufelemente (15a-15d) der Dispersionseinrichtung (10) rinnenförmig ausgebildet ist.

3. Dispersionseinrichtung nach Anspruch 2, dadurch gekennzeichnet, daß das rinnenförmig ausgebildete Ablaufelement (15a-15d) einen halbkreis-, U- oder V-förmigen oder einen polygonalen Querschnitt aufweist.

4. Dispersionseinrichtung nach einem der vorangehenden Ansprüche, dadurch gekennzeichnet, daß mindestens ein Ablaufelement (15a-15d) in seinem Abtropfbereich (19a-19d) einen nach außen gebogenen Verlauf aufweist.

5. Dispersionseinrichtung nach einem der vorangehenden Ansprüche, dadurch gekennzeichnet, daß jedem Ablaufkanal (16a-16d) mindestens eine Einlaßöffnung (25) zugeordnet ist.

6. Dispersionseinrichtung nach Anspruch 5, dadurch gekennzeichnet, daß mindestens eine der Einlaßöffnungen (25) des hülsenförmigen Zentralelements (11) schlitzförmig oder kreisförmig ausgebildet ist.

7. Dispersionseinrichtung nach einem der vorangehenden Ansprüche, dadurch gekennzeichnet, daß das Zentralelement (11) der Dispersionseinrichtung (10) einen radial nach außen vorspringendes Anschlagelement, insbesondere einen Flansch (30), aufweist.

8. Dispersionseinrichtung nach Anspruch 7, dadurch gekennzeichnet, daß der Flansch (30) integral mit dem Zentralelement (11) ausgebildet oder fest mit diesem (11) verbunden ist.

9. Dispersionseinrichtung nach einem der vorangehenden Ansprüche, dadurch gekennzeichnet, daß das hülsenförmige Zentralelement (11) einen kreisförmigen, ovalen oder polygonalen Querschnitt aufweist.

10. Flüssigkeitsverteiler mit einem Bodenbereich (1a), in dem mindestens eine Auslaßöffnung (2) vorgesehen ist, und mit zwei Wandbereichen (1b, 1c), dadurch gekennzeichnet, daß eine Dispersionseinrichtung (10) nach einem der Ansprüche 1 bis 9 in der Auslaßöffnung (2) eingesetzt ist.

11. Flüssigkeitsverteiler nach Anspruch 10, dadurch gekennzeichnet, daß mindestens einer der Auslaßöffnungen (2) des Flüssigkeitsverteilers (100) ein Hüllelement (40) zugeordnet ist, welches das in die Auslaßöffnung (2) eingesetzte Zentralelement (11) der Dispersionseinrichtung (10) umgibt.

12. Flüssigkeitsverteiler nach Anspruch 11, dadurch gekennzeichnet, daß das Hüllelement (40) mindestens eine Eintrittsöffnung (41) aufweist.

13. Flüssigkeitsverteiler nach einem der Ansprüche 11 oder 12, dadurch gekennzeichnet, daß das Hüllelement (40) mit dem Boden (1a) des Flüssigkeitsverteilers (100) verbunden ist.

## Claims

1. A dispersion device for a liquid distributor for the trickling of mass and/or heat transfer systems, in particular of packings or packing elements arranged in columns or towers, which has a tube-shaped central element (11) which can be inserted in an outlet opening (2) of a liquid distributor (1) and which has in the upper section of its wall (11a) several inlet openings (25) through which the liquid (F) present in the liquid distributor (1; 100) can enter into the interior space (12) of the central element (11) without pressure load, characterized in that in the interior space (12) of the central element (11) one or several discharge elements (15a-15d) are arranged, each having an upper channel section (18a-18d) and a lower trickle section (19a-19d), the upper channel section or sections (18a-18d) of the discharge element or elements (15a-15d) dividing a corresponding number of discharge channels (16a-16d) from the interior space (12) of the central element (11) which the liquid (F) can enter through the inlet openings (25) arranged in the wall (11a) of the central element (11), and the lower trickle section or sections (19a-19d) of the discharge elements (15a-15d), coming out of the central element (11), form finger-shaped elements (17a-17d) which point away from the longitudinal axis of the central element (11), from which finger-shaped elements the liquid (F) of the liquid distributor (1; 100), entering the discharge channel or channels (16a-16d) through the inlet openings (25) of the central element (11), can trickle onto the mass and/or heat transfer system.

2. The dispersion device according to claim 1, characterized in that at least one of the discharge elements (15a-15d) of the dispersion device (10) is trough-shaped.

3. The dispersion device according to claim 2, characterized in that the trough-shaped discharge element (15a-15d) has a semi-circular, U- or V- shaped or a polygonal cross-section.

4. The dispersion device according to one of the preceding claims, characterized in that at least one discharge element (15a-15d) has in its trickle section (19a-19d) an outwardly curved shape.

5. The dispersion device according to one of the preceding claims, characterized in that at least one inlet opening (25) is assigned to each discharge channel (16a-16d).

6. The dispersion device according to claim 5, characterized in that at least one of the inlet openings (25) of the tube-shaped central element (11) is slit-shaped or circular.

7. The dispersion device according to one of the preceding claims, characterized in that the central element (11) of the dispersion device (10) has a radially outwardly projecting stop element, in particular a flange (30).

8. The dispersion device according to claim 7, characterized in that the flange (30) is formed integrally with the central element (11) or is firmly connected with the latter (11).

9. The dispersion device according to one of the preceding claims, characterized in that the tube-shaped central element (11) has a circular, oval or polygonal cross-section.

10. A liquid distributor with a bottom section (1a), in which there is provided at least one outlet opening (2), and with two wall sections (1b, 1c), characterized in that a dispersion device (10) according to one of the claims 1 to 9 is inserted in the outlet opening (2).

11. The liquid distributor according to claim 10, characterized in that an encasing element (40) is assigned to at least one of the outlet openings (2) of the liquid distributor (100), said encasing element (40) surrounding the central element (11) of the dispersion device (10) inserted in the outlet opening (2).

12. The liquid distributor according to claim 11, characterized in that the encasing element (40) has at least one inlet opening (41).

13. The liquid distributor according to one of the claims 11 or 12, characterized in that the encasing element (40) is connected to the bottom (1 a) of the liquid distributor (100).

## Revendications

1. Mécanisme de dispersion pour un distributeur de liquide destiné à l'irrigation de systèmes d'échange de matière et/ou de chaleur, en particulier de garnissages ou d'éléments à encastrer dans des colonnes ou dans des tours, qui présente un élément central (11) en forme de manchon qui peut venir s'insérer dans une ouverture d'évacuation (2) d'un distributeur de liquide (1) et qui présente plusieurs ouvertures d'entrée (25) dans la zone supérieure de sa paroi (11a), à travers lesquelles le liquide (F) présent dans le distributeur de liquide (1; 100) peut pénétrer en l'absence d'une mise sous pression dans l'espace interne (12) de l'élément central (11), caractérisé en ce que, dans l'espace interne (12) de l'élément central (11), sont disposés un ou plusieurs éléments d'écoulement (15a - 15d) qui présentent respectivement une zone supérieure en forme de canal (18a - 18d) et une zone inférieure d'écoulement goutte à goutte (19a - 19d), dans lequel la ou les zones supérieures en forme de canal (18a - 18d) de l'élément ou des éléments d'écoulement (15a - 15d) délimitent, par rapport à l'espace interne (12) de l'élément central (11), un nombre correspondant de canaux d'écoulement (16a - 16d) dans lesquels le liquide (F) peut pénétrer à travers les ouvertures d'entrée (25) disposées dans la paroi (11a) de l'élément central (11), et dans lequel la ou les zones inférieures d'écoulement goutte à goutte (19a - 19d) des éléments d'écoulement (15a - 15d) faisant saillie par rapport à l'élément central (11) représentent des éléments en forme de doigts (17a - 17d) se détournant de l'axe longitudinal de l'élément central (11), à partir duquel ou à partir desquels le liquide (F) du distributeur de liquide (1; 100) pénétrant à travers les ouvertures d'entrée (25) de l'élément central (11) dans le canal ou dans les canaux d'écoulement (16a - 16d) est à même de s'écouler goutte à goutte sur le système d'échange de matière et/ou de chaleur.

2. Mécanisme de dispersion selon la revendication 1, caractérisé en ce qu'au moins un des éléments d'écoulement (15a - 15d) du mécanisme de dispersion (10) est réalisé en forme de rigole.

3. Mécanisme de dispersion selon la revendication 2, caractérisé en ce que l'élément d'écoulement (15a - 15d) réalisé en forme de rigole présente une section transversale semi-circulaire, en u ou en v ou encore une section transversale polygonale.

4. Mécanisme de dispersion selon l'une quelconque des revendications précédentes, caractérisé en ce qu'au moins un élément d'écoulement (15a - 15d) présente, dans sa zone d'écoulement goutte à goutte (19a - 19d), l'allure d'une courbe orientée vers l'extérieur.

5. Mécanisme de dispersion selon l'une quelconque des revendications précédentes, caractérisé en ce qu'au moins une ouverture d'entrée (25) est attribuée à chaque canal d'écoulement (16a - 16d).

6. Mécanisme de dispersion selon la revendication 5, caractérisé en ce qu'au moins une des ouvertures d'entrée (25) de l'élément central en forme de manchon (11) est réalisée en forme de fente ou en forme circulaire.

7. Mécanisme de dispersion selon l'une quelconque des revendications précédentes, caractérisé en ce que l'élément central (11) du mécanisme de dispersion (10) présente un élément de butée faisant saillie vers l'extérieur en direction radiale. en particulier une bride (30).

8. Mécanisme de dispersion selon la revendication 7, caractérisé en ce que la bride (30) est réalisée de manière solidaire avec l'élément central (11) ou est reliée à demeure à cet élément central (11).

9. Mécanisme de dispersion selon l'une quelconque des revendications précédentes, caractérisé en ce que l'élément central en forme de manchon (11) présente une section transversale circulaire, ovale au polygonale.

10. Distributeur de liquide comprenant une zone inférieure (1a) dans laquelle on prévoit au moins une ouverture d'évacuation (2) et deux zones de parois (1b, 1c), caractérisé en ce qu'un mécanisme de dispersion (10) selon l'une quelconque des revendications 1 à 9 est inséré dans l'ouverture d'évacuation (2).

11. Distributeur de liquide selon la revendication 10, caractérisé en ce qu'un élément d'enveloppement (40) est attribué à au moins une des ouvertures d'évacuation (2) du distributeur de liquide (100), qui entoure l'élément central (11) du mécanisme de dispersion (10) inséré dans l'ouverture d'évacuation (2).

12. Distributeur de liquide selon la revendication 11, caractérisé en ce que l'élément d'enveloppement (40) présente au moins une ouverture d'entrée (41).

13. Distributeur de liquide selon l'une quelconque des revendications 11 ou 12, caractérisé en ce que l'élément d'enveloppement (40) est relié à la partie inférieure (1a) du distributeur de liquide (100).
